# FASCICULE DE BREVET EUROPEEN

(11) **EP 3 813 168 B1**
(45) Date de publication et mention de la délivrance du brevet: **15.03.2023**
(21) Numéro de dépôt: 20198585.0
(22) Date de dépôt: 28.09.2020
(51) Int. Cl.: H01M 8/00, H01M 8/0206, H01M 8/0221, H01M 8/0228, H01M 8/0256, H01M 8/0444, H01M 8/04664, H01M 8/2418, H01M 8/2457, G01N 27/407, H01M 8/04537, H01M 8/1018

(54) **PILE A COMBUSTIBLE ADAPTEE A CARACTERISER AU MOINS UN POLLUANT PRESENT DANS UN GAZ REACTIF**
BRENNSTOFFZELLE, DIE FÜR DIE CHARAKTERISIERUNG MINDESTENS EINES IN EINEM REAKTIVEN GAS ENTHALTENEN SCHADSTOFFES GEEIGNET IST
FUEL CELL ADAPTED FOR CHARACTERISING AT LEAST ONE POLLUTANT PRESENT IN A REAGENT GAS

(30) Priorité: 30.09.2019 FR 1910822
(43) Date de publication de la demande: 28.04.2021
(73) Titulaire: Commissariat à l'Energie Atomique et aux Energies Alternatives, 75015 Paris (FR)
(72) Inventeur: VINCENT, Rémi, 38054 GRENOBLE Cedex 09 (FR); GARNIER, Laurent, 38054 GRENOBLE Cedex 09 (FR); GERARD, Mathias, 38054 GRENOBLE Cedex 09 (FR)
(74) Mandataire: INNOV-GROUP

(56) Documents cités:
- EP-A1- 3 429 006
- WO-A1-2007/078291
- US-A1- 2010 009 231

## Description

### DOMAINE TECHNIQUE

Le domaine de l'invention est celui des piles à combustible et plus précisément celui de la caractérisation de polluants présents dans le gaz comburant et/ou le gaz combustible alimentant une pile à combustible.

### ÉTAT DE LA TECHNIQUE ANTÉRIEURE

Une pile à combustible comporte généralement un empilement de cellules électrochimiques qui comprennent chacune une anode et une cathode séparées électriquement l'une de l'autre par un électrolyte, dans lesquelles a lieu une réaction électrochimique entre deux gaz réactifs qui sont introduits de manière continue. Dans le cas d'une pile à hydrogène, le gaz combustible (hydrogène) est apporté au contact de l'anode, alors que le gaz comburant (oxygène pur ou air) est amené au contact de la cathode. La réaction électrochimique est subdivisée en deux demi-réactions, une oxydation et une réduction, qui ont lieu respectivement à l'interface anode/électrolyte et à l'interface cathode/électrolyte. Elle requiert la présence d'un conducteur ionique entre les deux électrodes, à savoir l'électrolyte, et un conducteur électronique formé par le circuit électrique externe. L'empilement de cellules est le lieu de la réaction électrochimique : les réactifs doivent y être apportés, les produits et les espèces non réactives doivent en être évacués, tout comme la chaleur produite.

Or les gaz réactifs peuvent contenir des composés chimiques qui altèrent le fonctionnement de la pile à combustible. Ces composés chimiques, ou polluants, peuvent notamment s'adsorber sur les catalyseurs des couches actives des électrodes et ainsi induire une diminution du nombre de sites catalytiques actifs, et donc une baisse de la cinétique de transfert de charge. Aussi, la présence de tels polluants dans le gaz combustible et/ou le gaz comburant se traduit par une dégradation des performances de la pile à combustible, par exemple une diminution de la tension électrique globale de la pile à combustible pour une densité de courant électrique donnée.

A titre d'exemple, de tels polluants peuvent être le sulfure d'hydrogène H₂S, le dioxyde de soufre SO₂, le dioxyde d'azote NO₂, le monoxyde de carbone CO, le dioxyde de carbone CO₂, le toluène C₇H₈, entre autres. En effet, les polluants anodiques pouvant être présents dans l'hydrogène sont notamment le CO, le CO₂, le H₂S, entre autres. Ils proviennent généralement du procédé de fabrication de l'hydrogène par reformage mis en oeuvre. Les polluants cathodiques pouvant être présents dans l'air sont notamment le SO2 et le NOx. Ils proviennent habituellement de la combustion d'énergies fossiles (chauffage, véhicules à moteur thermique, etc.).

Lorsque de tels polluants sont présents et dégradent les performances de la pile à combustible de manière réversible, il est connu de réaliser des cycles de fonctionnement permettant de les supprimer du gaz réactif (par désorption vis-à-vis de la couche active). Cependant, cela implique généralement de stopper la fourniture d'énergie électrique par la pile à combustible à une charge électrique, ne serait-ce que pour procéder à la caractérisation du ou des polluants présents.

On connaît par ailleurs le document EP3429006A1 qui décrit un exemple de cellules électrochimiques de type PCB (*Printed Circuit Board,* en anglais) ; le document US2010/009231A1 qui décrit un exemple de cellules électrochimiques qui partagent une même membrane électrolytique ; et le document WO2007/078291A1 porte sur la détection d'un polluant au moyen d'un capteur dédié.

Il existe donc un besoin de disposer d'une pile à combustible adaptée à caractériser un polluant présent dans l'un et/ou l'autre des gaz réactifs de manière simple et facile à mettre en oeuvre, sans pour autant arrêter d'alimenter en énergie la charge électrique.

### EXPOSÉ DE L'INVENTION

L'invention a pour objectif de remédier au moins en partie aux inconvénients de l'art antérieur, et plus particulièrement de proposer une pile à combustible adaptée à caractériser, de manière simple et facile à mettre en oeuvre, au moins un polluant présent dans le gaz combustible et/ou dans le gaz comburant, tout en continuant à alimenter en énergie une charge électrique.

Une telle pile à combustible peut ainsi présenter une fonction d'évaluation de la qualité de l'air, en plus de sa fonction de générateur électrochimique, notamment lorsque le gaz comburant est de l'air provenant de l'environnement extérieur de la pile à combustible.

Pour cela, l'objet de l'invention est une pile à combustible destinée à être alimentée en gaz réactifs, comportant :
- plusieurs cellules électrochimiques, dont au moins une cellule dite de caractérisation, coplanaires les unes aux autres, lesquelles comportant : une même membrane électrolytique ; et deux mêmes plaques de maintien disposées de part et d'autre de la membrane électrolytique, comportant chacune une plaque isolante, réalisée en un matériau électriquement isolant, dans laquelle sont formées des canaux de distribution fluidique, et au travers de laquelle s'étendent des vias conducteurs ;
- un circuit électrique de distribution, adapté à fournir à une charge électrique un courant électrique généré par les cellules électrochimiques ;
- un dispositif de surveillance, comportant : un premier capteur de mesure d'un signal électrique de référence représentatif des performances de la pile à combustible ; au moins un connecteur, adapté à connecter la cellule de caractérisation au circuit électrique de distribution ou à un dispositif de caractérisation ; une première unité de traitement, connectée au premier capteur de mesure et au connecteur, adaptée à détecter une diminution des performances de la pile à combustible à partir de la valeur mesurée du signal électrique de référence, et le cas échéant à commander la connexion de la cellule de caractérisation au dispositif de caractérisation ;
- un dispositif de caractérisation, comportant : une source électrique d'un signal électrique d'excitation, connectée à la cellule de caractérisation ; un deuxième capteur de mesure d'un signal électrique de réponse, connecté à la cellule de caractérisation ; une deuxième unité de traitement, connectée à la source électrique et au deuxième capteur de mesure, et adaptée à caractériser un polluant présent dans au moins l'un des gaz réactifs à partir au moins du signal électrique de réponse mesuré.

Certains aspects préférés, mais non limitatifs de cette pile à combustible sont les suivants.

La pile à combustible peut comporter plusieurs cellules électrochimiques destinées à être des cellules de caractérisation, et peut comporter des catalyseurs différents d'une cellule de caractérisation à l'autre.

La pile à combustible peut être adaptée à être alimentée en air provenant de l'environnement extérieur de la pile à combustible.

Les canaux de distribution fluidique d'un même gaz réactif desdites cellules électrochimiques peuvent être reliés à un même collecteur d'entrée et à un même collecteur de sortie.

Chaque cellule électrochimique peut être connectée à une puce de commande assurant la connexion en série ou en parallèle de la cellule électrochimique avec les autres cellules électrochimiques, et peut comporter chacune au moins le dispositif de caractérisation.

Chaque cellule électrochimique peut comporter un assemblage membrane électrodes, disposé entre deux plaques de maintien, la membrane électrolytique étant commune aux assemblages membrane électrodes, et les plaques de maintien étant formée chacune d'une plaque isolante, réalisée en un matériau électriquement isolant, commune aux cellules électrochimiques.

Chaque plaque de maintien peut comporter :
- la plaque isolante présentant une face interne orientée vers la membrane électrolytique, et une face externe opposée, la face interne présentant des structurations formant des canaux de distribution fluidique séparés deux à deux par une paroi longitudinale, les parois longitudinales présentant chacune une face d'extrémité orientée vers la membrane électrolytique ;
- des portions conductrices de contact, réalisées en un matériau électriquement conducteur, s'étendant sur la face d'extrémité des parois longitudinales au contact d'une électrode d'une cellule électrochimique ;
- au moins une piste conductrice de polarisation de ladite cellule électrochimique, réalisée en un matériau électriquement conducteur, s'étendant sur la face externe de la plaque isolante, et connecté audit circuit électrique de distribution ;
- des vias conducteurs, s'étendant au travers des parois longitudinales, et connectant les portions conductrices de contact avec les piste conductrice de polarisation.

L'invention porte également sur un procédé de fonctionnement d'une pile à combustible selon l'une quelconque des caractéristiques précédentes, la pile à combustible étant connectée à une charge électrique, comportant les étapes suivantes :
- alimentation des cellules électrochimiques en gaz réactifs, une cellule de caractérisation étant connectée au circuit électrique de distribution ; et fourniture d'un courant électrique généré par les cellules électrochimiques à la charge électrique ;
- mesure du signal électrique de référence, et détection par le dispositif de surveillance, à partir de la valeur mesurée du signal électrique de référence, d'une diminution des performances de la pile à combustible ;
- connexion de la cellule de caractérisation au dispositif de caractérisation, et caractérisation d'un polluant présent dans au moins l'un des gaz réactifs par les sous-étapes suivantes :
   ∘ application d'un signal électrique d'excitation à la cellule de caractérisation par la source électrique ;
   ∘ mesure d'un signal électrique de réponse par le deuxième capteur de mesure ;
   ∘ caractérisation du polluant par la deuxième unité de traitement à partir d'au moins le signal électrique de réponse mesuré.

La caractérisation du polluant peut être effectuée à partir d'une méthode électrochimique choisie parmi la courbe de polarisation, la spectroscopie d'impédance, l'échelon de courant, l'analyse harmonique, et la voltammétrie cyclique.

La caractérisation du polluant peut être obtenue par calcul d'au moins une valeur d'au moins un paramètre issu du signal électrique de réponse. Le procédé peut alors comporter une étape d'identification du polluant caractérisé par comparaison de la valeur calculée à au moins une valeur prédéterminée.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
la figure 1 est une vue schématique et partielle d'une pile à combustible selon un mode de réalisation ;
les figures 2A et 2B sont des vues, schématiques et partielles, respectivement de dessus et en coupe, illustrant les assemblages membrane électrodes et les plaques de maintien de deux cellules électrochimiques coplanaires d'une pile à combustible selon un mode de réalisation ;
la figure 3 est une vue éclatée et en perspective, schématique et partielle, d'une pile à combustible selon un mode de réalisation, comportant une pluralité de cellules électrochimiques coplanaires d'une pile à combustible munies chacune d'une puce de commande.

### EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près, et de préférence à 5% près. Par ailleurs, les termes « compris entre ... et ... » et équivalents signifient que les bornes sont incluses, sauf mention contraire.

L'invention porte sur une pile à combustible adaptée à caractériser au moins un polluant présent dans l'un et/ou l'autre des gaz réactifs. La pile à combustible est en outre adaptée à fournir un courant électrique de manière continue à une charge électrique, alors même qu'une phase de caractérisation du polluant est mise en oeuvre. La pile à combustible est ici de type PEM (*Proton Exchange Membrane,* en anglais), c'est-à-dire que la membrane électrolytique est une membrane échangeuse de protons.

Pour cela, la pile à combustible comporte une pluralité de cellules électrochimiques, distinctes et coplanaires, de type PCB (*Printed Circuit Board,* en anglais), dont au moins l'une des cellules électrochimiques est utilisée lors de la phase de caractérisation du polluant, alors même que la ou les autres cellules électrochimiques continuent de générer le courant électrique alimentant la charge électrique. Comme détaillé plus loin, la pile à combustible comporte pour cela un dispositif de surveillance et un dispositif de caractérisation.

D'une manière générale, par caractérisation, on entend la détermination d'au moins une information représentative de l'interaction d'un composé chimique présent dans un gaz comburant ou combustible avec des constituants de la couche active des cellules électrochimiques, cette interaction se traduisant par une dégradation des performances de la pile à combustible. Un tel composé chimique est alors considéré comme étant un polluant de la pile à combustible. La phase de caractérisation permet ainsi de déterminer la présence d'un tel polluant, puis, de manière avantageuse, d'identifier le polluant en question.

La pile à combustible selon l'invention peut trouver une application notamment dans l'évaluation de la qualité de l'air au moyen d'un objet mobile, par exemple un drone. L'énergie électrique est alors fournie par une ou plusieurs cellules électrochimiques, et la qualité de l'air est évaluée par la caractérisation d'au moins un polluant de la pile à combustible.

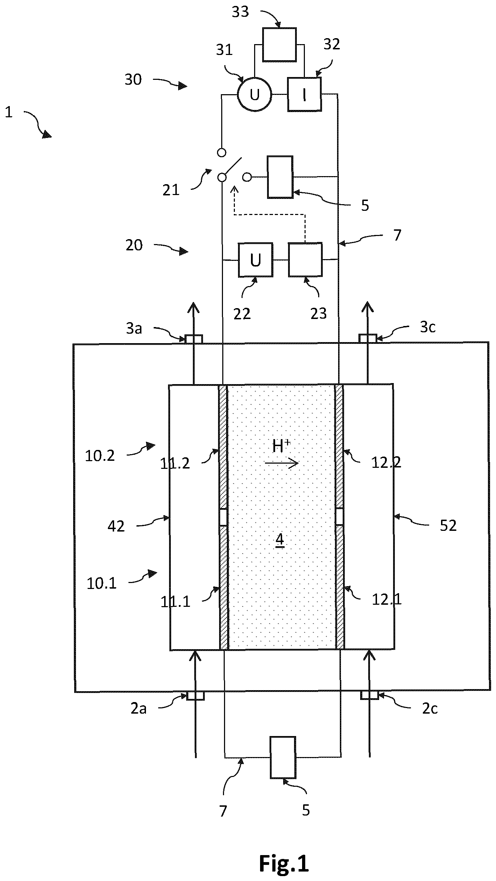

La figure 1 est une vue schématique et partielle de la pile à combustible 1 selon un mode de réalisation. La pile à combustible 1 comporte ainsi des cellules électrochimiques 10 distinctes, coplanaires, et de type PCB, un dispositif de surveillance 20, et un dispositif de caractérisation 30.

Dans cet exemple, la pile à combustible 1 est une pile à hydrogène alimentée en air à partir de l'environnement extérieur. Aussi, l'air est susceptible de contenir des composés chimiques formant des polluants aux cathodes 12 des cellules électrochimiques 10 de la pile à combustible 1. La pile à combustible 1 est alors avantageusement utilisée comme un capteur de la qualité de l'air. Elle peut fournir de l'énergie électrique à un engin mobile (véhicule terrestre, drone...) sur lequel elle est assemblée.

La pile à combustible 1 est adaptée à recevoir de l'hydrogène au collecteur d'entrée anodique 2a et de l'air au collecteur d'entrée cathodique 2c, et à fournir de l'eau au collecteur de sortie cathodique 3c et un courant électrique alimentant une charge électrique 5 (batterie électrochimique, supercondensateur...), par exemple ici le moteur électrique de l'engin mobile.

Chaque cellule électrochimique 10 comporte un assemblage membrane électrodes (AME) formé de la membrane électrolytique 4 et de couches actives formant les électrodes 11, 12. Deux plaques de maintien 40, 50 de type PCB sont disposées de part et d'autre de la membrane 4, et assurent la distribution fluidique des gaz réactifs jusqu'aux électrodes 11, 12, en reliant un collecteur d'entrée 2a, 2c au collecteur de sortie 3a, 3c, et participent à la circulation des électrons générés.

Les cellules électrochimiques 10 sont dites distinctes dans la mesure où elles génèrent un courant électrique qui leur est propre. Elles sont dites coplanaires dans la mesure où elles partagent la même membrane électrolytique 4 ainsi que les mêmes plaques de maintien 40, 50.

Les AME des cellules électrochimiques 10 comportent une même membrane électrolytique 4, laquelle sépare l'anode 11 de la cathode 12 de chaque cellule électrochimique 10. Elle permet la diffusion de protons (par ex. sous forme d'ions H30+) d'une anode 11 jusqu'à la cathode 12 d'une même cellule électrochimique 10. Elle est monolithique et réalisée en un même matériau.

Chaque cellule électrochimique 10 comporte une anode 11, en contact de la membrane électrolytique 4, qui reçoit de l'hydrogène par des canaux de distribution fluidique 42. L'anode 11 comporte une couche active adaptée à réaliser l'oxydation de l'hydrogène, contenant un catalyseur favorisant cette réaction électrochimique. Les anodes 11.1, 11.2 sont électriquement isolées les unes des autres dans le plan de la membrane électrolytique 4.

De même, chaque cellule électrochimique 10 comporte une cathode 12, en contact de la membrane électrolytique 4 et disposée en regard de l'anode 11, qui reçoit de l'air par des canaux de distribution fluidique 52. La cathode 12 comporte une couche active adaptée à réaliser une réaction de réduction produisant de l'eau à partir de l'oxygène introduit, et de protons et d'électrons provenant de l'anode 11. Elle comporte également un catalyseur favorisant cette réaction électrochimique. Les cathodes 12.1, 12.2 sont électriquement isolées les unes des autres dans le plan de la membrane électrolytique.

La pile à combustible 1 comporte un circuit électrique de distribution 7 qui connecte l'anode 11 à la cathode 12 d'une même cellule électrochimique 10, et autorise la circulation des électrons entre ces deux électrodes 11, 12, et fournit le courant électrique à la charge électrique 5. Il assure la connexion en série et/ou en parallèle des cellules électrochimiques 10.

La pile à combustible 1 comporte en outre un dispositif de surveillance 20 adapté à détecter la dégradation des performances de la pile à combustible 1 du fait de la présence d'un polluant dans l'un et/ou l'autre des gaz réactifs, et en particulier dans l'air lorsqu'il provient de l'environnement extérieur de la pile à combustible 1.

Le dispositif de surveillance 20 comporte un capteur de mesure 22 d'un signal électrique de référence généré par la pile à combustible 1 en fonctionnement, par exemple la tension électrique totale aux bornes des cellules électrochimiques 10, voire la puissance électrique fournie par la pile à combustible 1 à la charge électrique 5, voire encore la tension électrique aux bornes de l'une ou l'autre des cellules électrochimiques. Dans cet exemple, le capteur de mesure 22 est adapté à mesurer la tension électrique totale de la pile à combustible 1.

Il comporte également une unité de traitement 23, connectée au capteur de mesure 22, et adaptée à détecter une dégradation des performances de la pile à combustible 1 (dans cet exemple) ou de la ou des cellules électrochimiques 20 surveillées. Ici, à partir de la valeur mesurée Uₘₑₛ de la tension électrique totale, elle calcule un écart entre la valeur mesurée Uₘₑₛ et une valeur nominale Uₙₒₘ prédéterminée. Lorsque cet écart ΔUₘₑₛ est supérieur à un écart seuil ΔUₜₕ prédéterminé, l'unité de traitement 23 en déduit que les performances de la pile à combustible 1 sont dégradées, et active le dispositif de caractérisation 30, autrement dit, initie une phase de caractérisation du ou des polluants présents.

Pour cela, elle commande un connecteur 21. Celui-ci appartient au dispositif de surveillance 20 et est adapté à connecter une cellule de caractérisation au circuit électrique de distribution (et donc à la charge électrique 5) ou à un dispositif de caractérisation 30. Le connecteur 21 déconnecte donc au moins l'une des cellules électrochimiques 10 vis-à-vis du circuit électrique de distribution 7 (et donc de la charge électrique 5), et la connecte au dispositif de caractérisation 30. La cellule électrochimique 10 est alors dite cellule de caractérisation. Aussi, la charge électrique 5 reste alimentée électriquement par la ou les cellules électrochimiques 10 restantes. Autrement dit, la cellule de caractérisation 10 est connectée à la charge électrique 5 (via le circuit 7) par le connecteur 21 en-dehors des phases de caractérisation, et est déconnectée du circuit 7 (et donc de la charge électrique 5) et connectée au dispositif de caractérisation 30 pendant les phases de caractérisation.

La pile à combustible 1 comporte en outre un dispositif de caractérisation 30. Il comporte une source électrique 31 d'un signal électrique d'excitation, un capteur de mesure 32 d'un signal électrique de réponse au signal d'excitation, et une unité de traitement 33. La source électrique 31 et le capteur de mesure 32 sont connectés à la cellule de caractérisation 10 par le connecteur 21, et l'unité de traitement 33 est connectée à la source électrique 31 et au capteur de mesure 32. Sur la fig.1, l'unité de traitement 33 est distincte de l'unité de traitement 23 par souci de clarté, mais les deux unités peuvent être confondues.

Le type de signaux électrique d'excitation et de réponse dépend de la méthode de caractérisation mise en oeuvre. Cette méthode est une méthode dite électrochimique et est effectuée sous les mêmes conditions opératoires que celles des autres cellules électrochimiques. A titre d'exemple, la méthode de caractérisation mise en oeuvre peut être choisie parmi la courbe de polarisation, la spectroscopie d'impédance, l'échelon de courant, l'analyse harmonique, et la voltammétrie cyclique, entre autres.

Ainsi, dans le cas de la caractérisation du polluant présent par la méthode de la voltammétrie cyclique, le signal d'excitation est un potentiel appliqué à une électrode ou est une différence de potentiel appliquée à la cellule de caractérisation 10, et le signal de réponse est le courant faradique. L'unité de traitement 33 commande la source de tension 31 de sorte que le potentiel présente par exemple une variation triangulaire. Le courant faradique est mesuré par le capteur de courant 32, et l'unité de traitement 33 obtient des courbes intensité-potentiel dites voltammogrammes. L'unité de traitement 33 peut identifier un pic de courant faradique dont les caractéristiques (valeur d'intensité, du potentiel, largeur à mi-hauteur...) caractérisent le polluant présent (comme l'illustre notamment l'article de Rush et al intitulé Nuclear Magnetic Résonance and Voltammetry Studies of Carbon Monoxide Adsorption and Oxidation on a Carbon-Supported Platinum Fuel Cell Electrocatalyst, J. Electrochem. Soc. 148 (2) A137-A148 (2001). De manière avantageuse, l'unité de traitement 33 peut ensuite comparer les caractéristiques du pic d'intensité à des valeurs préenregistrées dans une base de données. La comparaison permet alors d'identifier le polluant présent. Une telle base de données peut être des abaques obtenus préalablement, par exemple en reliant les caractéristiques du pic d'intensité du courant faradique à différents types de polluant, en fonction par exemple des caractéristiques physicochimiques de la cellule de caractérisation (type de catalyseur, entre autres).

Par ailleurs, dans le cas de la caractérisation du polluant présent par la méthode de la courbe de polarisation, le signal d'excitation peut être le courant électrique imposé à la cellule de caractérisation 10, et le signal de réponse est alors la tension électrique aux bornes de cette cellule 10, mais l'inverse est possible également. L'unité de traitement 33 fait varier l'intensité du courant électrique imposé et enregistre les valeurs mesurées de la tension électrique. On obtient ainsi une courbe de polarisation pour des conditions opératoires de fonctionnement de la pile à combustible 1 (température, pressions et débits de gaz), laquelle courbe de polarisation caractérise le polluant présent. L'unité de traitement peut ensuite identifier le polluant en question, par comparaison de la courbe de polarisation obtenue avec différentes courbes de polarisation préenregistrées dans une base de données.

Ces méthodes électrochimiques de caractérisation (voltammétrie, courbe de polarisation, spectroscopie d'impédance...) ne sont pas détaillées davantage dans la mesure où elles sont connues de l'homme du métier.

Ainsi, la pile à combustible 1 est en mesure de caractériser au moins un polluant présent dans le gaz comburant et/ou le gaz combustible, de manière simple et par une méthode électrochimique de caractérisation mise en oeuvre facilement sous les mêmes conditions opératoires que les autres cellules électrochimiques 10. Ceci est obtenu par l'utilisation de plusieurs cellules électrochimiques 10 distinctes, coplanaires, et de type PCB.

Il est en effet possible d'imposer simplement un signal électrique d'excitation à au moins une cellule de caractérisation 10 et ainsi de caractériser le polluant présent, sans avoir à imposer ce même signal électrique d'excitation à l'ensemble des cellules électrochimiques 10 de la pile à combustible 1. La pile à combustible 1 peut donc continuer à alimenter la charge électrique en énergie, alors qu'une phase de caractérisation est en cours, sans que soient modifiées les conditions opératoires de fonctionnement en termes notamment de pression, température, débits fluidiques.

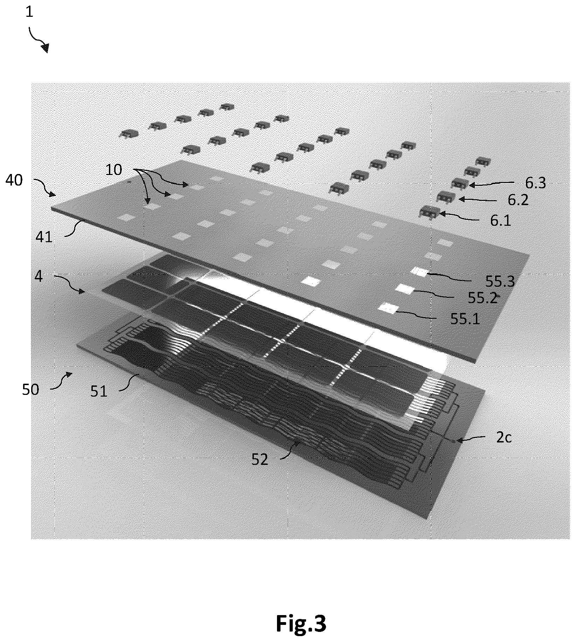

La pile à combustible 1 peut ainsi assurer la surveillance de ses performances en temps réel, et peut initier une ou plusieurs phases de caractérisation du ou des polluants présents, en parallèle de l'alimentation de la charge électrique 5. L'information de caractérisation peut être exploitée pour évaluer la qualité de l'air, dans le cas d'une pile à combustible 1 stationnaire disposée dans une zone à surveiller, ou dans le cas d'une pile à combustible 1 disposée dans un engin mobile. On évite ainsi d'avoir recours à une instrumentation spécifique distincte de la pile à combustible 1, difficile ou coûteuse à mettre en oeuvre. De plus, la pile à combustible 1 présente une grande facilité de configuration, dans le sens où lorsque les cellules électrochimiques 10 sont toutes munies d'une puce de commande 6 (cf. fig.3) comportant chacune les dispositifs de surveillance 20 et de caractérisation 30, la phase de caractérisation peut être simplement initiée pour telle ou telle cellule électrochimique 10.

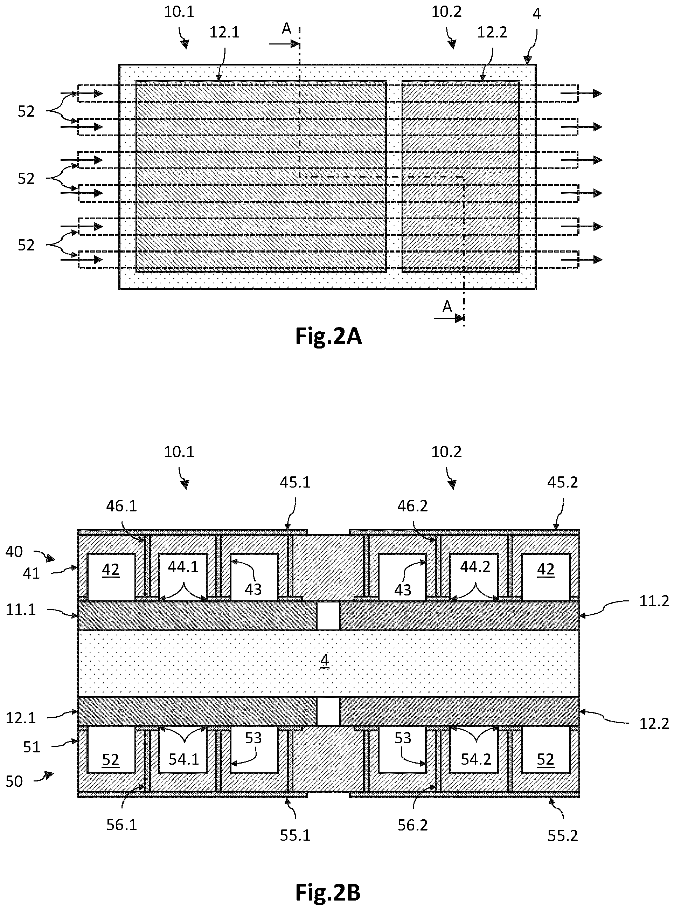

Les figures 2A et 2B sont des vues, schématiques et partielles, de dessus (fig.2A) et en coupe (2B) selon la ligne de coupe A-A illustrée sur la fig.2A, d'un exemple de deux cellules électrochimiques 10.1, 10.2 distinctes et coplanaires de type PCB d'une pile à combustible 1 selon un mode de réalisation. Deux cellules électrochimiques sont ici illustrées par souci de clarté, mais la pile à combustible 1 peut comporter un grand nombre de cellules électrochimiques 10 coplanaires de type PCB.

Sur la fig.2A, les canaux 52 du réseau fluidique de distribution cathodique sont représentés en pointillés et les flèches représentent l'axe d'écoulement fluidique. D'autres exemples d'axes d'écoulement sont bien entendu possibles, comme par exemple des canaux en serpentin. Dans cet exemple, les cellules électrochimiques 10.1, 10.2 sont agencées en série vis-à-vis de la distribution fluidique, mais des agencements en parallèle sont possibles. Ainsi, l'air s'écoule dans les canaux de distribution cathodique 52 entre l'entrée et la sortie, et vient au contact de la cathode 12.1 de la première cellule électrochimique 10.1 puis de la cathode 12.2 de la deuxième cellule électrochimique 10.2. Dans cet exemple, la surface des électrodes 12.1, 12.2 diminue suivant l'axe d'écoulement fluidique, mais elle peut rester constante.

Sur la fig.2B sont illustrés les AME (qui se partagent la même membrane électrolytique 4) des deux cellules électrochimiques 10.1, 10.2, ainsi que les plaques de maintien 40, 50. Chaque cellule électrochimique 10.1, 10.2 comporte ainsi un assemblage membrane électrodes formé d'une anode 11.1, 11.2 et d'une cathode 12.1, 12.2 séparées l'une de l'autre par une membrane électrolytique 4. Les assemblages sont adjacents les uns aux autres dans le plan XY et partagent la même membrane électrolytique 4. Les anodes 11.1, 11.2 et les cathodes 12.1, 12.2 des cellules électrochimiques 10.1, 10.2 sont distinctes et ainsi isolées électriquement les unes des autres par la membrane électrolytique 4, dans la mesure où la membrane électrolytique 4 est conductrice de protons, mais isolante vis-à-vis des électrons. Un espace d'isolation électrique est prévu entre les anodes 11.1, 11.2 d'une part et entre les cathodes 12.1, 12.2 d'autre part, cet espace pouvant être rempli par un matériau diélectrique.

Chaque cellule électrochimique 10.1, 10.2 comporte en outre des plaques de maintien 40, 50 qui enserrent l'assemblage membrane électrodes correspondant. Les plaques de maintien anodique 40 et cathodique 50 comportent chacune une même plaque isolante 41, 51, de préférence monolithique et réalisée en un même matériau électriquement isolant. Chaque plaque isolante 41, 51 peut être réalisée en un matériau choisi parmi la résine époxy, le polyimide, les polymères fluorés, le poly(naphtalate d'éthylène) (PEN) et le poly(téréphtalate d'éthylène) (PET). Les plaques de maintien 40, 50 sont cependant adaptées à appliquer un potentiel électrique distinct d'une cellule électrochimique 10 à l'autre.

En référence à la plaque de maintien anodique 40 (la plaque de maintien cathodique est similaire), la plaque isolante 41 présente une face externe et une face interne opposée l'une à l'autre suivant l'axe d'épaisseur de la plaque 41. La face interne est orientée vers la membrane électrolytique 4, et comporte des premières structurations définissant les canaux de distribution 42 d'une première cellule 10.1, et des deuxièmes structurations définissant les canaux de distribution 42 d'une deuxième cellule 10.2 adjacente à la première cellule. Dans cet exemple où les cellules électrochimiques 10.1, 10.2 sont agencées fluidiquement en série, les canaux de distribution 42 de la première cellule électrochimique 10.1 sont communs à ceux 42 de la deuxième cellule électrochimique 10.2. Les canaux de distribution 42 sont séparés deux à deux par une paroi longitudinale 43 de la plaque isolante 41, dont la face d'extrémité est en appui contre une anode 11.1, 11.2. Les faces d'extrémité sont revêtues par un premier ensemble de portions conductrices de contact 44.1 de la première cellule électrochimique 10.1 et par un deuxième ensemble de portions conductrices de contact 44.2 de la deuxième cellule électrochimique 10.2.

Le premier ensemble de portions conductrices de contact 44.1, au contact de la première anode 11.1, est relié à une première piste conductrice de polarisation 45.1 qui s'étend sur la face externe. La première piste 45.1 est connectée au premier ensemble de portions conductrices de contact 44.1 par des premiers vias conducteurs 46.1 qui s'étendent au travers de la plaque isolante 41, notamment dans les parois longitudinales 43. De manière similaire, le deuxième ensemble de portions conductrices de contact 44.2, au contact de la deuxième anode 11.2, est relié à la deuxième piste conductrice de polarisation 45.2 qui s'étend sur la même face externe. La piste conductrice de polarisation 45.2 est connectée au deuxième ensemble de portions conductrices de contact 44.2 par des deuxièmes vias conducteurs 46.2. Les première et deuxième pistes conductrices de polarisation 45.1, 45.2 sont électriquement séparées l'une de l'autre.

Ainsi, la même plaque isolante 41 forme des canaux 42 du réseau fluidique de distribution pour les anodes 11.1, 11.2 adjacentes et participe à former une plaque de maintien 40 adaptée à appliquer un premier potentiel électrique à la première anode 11.1, et à former une même plaque de maintien 40 adaptée à appliquer un deuxième potentiel électrique à la deuxième anode 11.2 éventuellement différent du premier potentiel électrique, notamment lors d'une phase de caractérisation. La plaque de maintien cathodique 50 comporte, de manière similaire, une même plaque isolante 51, et est identique ou similaire à ce qui a été décrit relativement à la plaque de maintien anodique 40.

Les différentes pistes conductrices de polarisation 45, 55 peuvent être électriquement connectées à une ou plusieurs puces de commande (non représentées), et adaptées à assurer la mise en série ou en parallèle des différentes cellules électrochimiques 10, permettant ainsi de réguler la puissance électrique délivrée par la pile à combustible 1, et adaptées à activer la phase de caractérisation de la cellule électrochimique correspondante.

Des modes de réalisation particuliers viennent d'être décrits. Différentes variantes et modifications apparaîtront à l'homme du métier.

Ainsi, la figure 3 est une vue éclatée et en perspective d'une pile à combustible 1 selon un autre mode de réalisation, dans lequel elle contient une pluralité de cellules électrochimiques 10 distinctes et coplanaires.

Les deux plaques de maintien 40, 50 définissent plusieurs réseaux de distribution agencés en parallèle et reliés aux mêmes collecteurs d'entrée et de sortie de gaz réactifs. Aussi, les cellules électrochimiques 10 sont agencées fluidiquement en série vis-à-vis de certaines cellules électrochimiques 10 et en parallèle vis-à-vis d'autres cellules électrochimiques 10. La fig.3 illustre en particulier le réseau de distribution cathodique 52 défini dans la plaque isolante 51, qui s'étend à partir du collecteur d'entrée cathodique 2c.

Les cellules électrochimiques 10 sont toutes coplanaires et de type PCB dans la mesure où elles partagent la même membrane électrolytique 4, et les deux plaques de maintien 40, 50 partagent les mêmes plaques isolantes 41, 51.

Chaque cellule électrochimique 10 comporte ici une puce de commande 6 de type ASIC (pour *Application-Specific Integrated Circuit,* en anglais), adaptée à connecter en série et/ou en parallèle les cellules électrochimiques 10. De plus, chaque puce de commande 6 peut être adaptée à initier une phase de caractérisation à la cellule électrochimique correspondante, étant entendu qu'au moins une partie des cellules électrochimiques restantes sont en mesure d'alimenter en énergie la charge électrique. Elles sont ici connectées notamment aux pistes conductrices de polarisation 55.

A ce titre, certaines cellules électrochimiques 10 destinées à être des cellules de caractérisation comportent avantageusement des catalyseurs différents, de manière à pouvoir caractériser et avantageusement identifier plusieurs polluants différents. Il peut ainsi s'agir de différents alliages du platine, par exemple PtCo, PtRu, PtZn, PtMn, PtMnCo, entre autres.

Par ailleurs, la pile à combustible 1 peut comporter un réservoir d'un gaz réactif déterminé (non représenté), par exemple d'oxygène pur ou d'air dont la composition est connue et exempte de polluants. Ainsi, une phase de calibration peut être effectuée régulièrement pour vérifier que la diminution des performances de la pile à combustible 1 identifiée par le dispositif de surveillance est effectivement due à la présence d'un polluant et non pas liée à une dégradation propre à la pile à combustible 1 (rupture locale de la membrane ou autre).

## Revendications

1. Pile à combustible (1), destinée à être alimentée en gaz réactifs, comportant :
∘ plusieurs cellules électrochimiques (10), dont au moins une cellule dite de caractérisation, coplanaires les unes aux autres, comportant :
• une même membrane électrolytique (4), et
• deux mêmes plaques de maintien (40, 50) disposées de part et d'autre de la membrane électrolytique (4), comportant chacune une plaque isolante (41, 51), réalisée en un matériau électriquement isolant, dans laquelle sont formées des canaux de distribution fluidique (42, 52), et au travers de laquelle s'étendent des vias conducteurs (46, 56) ;
∘ un circuit électrique de distribution (7), adapté à fournir à une charge électrique (5) un courant électrique généré par les cellules électrochimiques (10) ;
∘ un dispositif de surveillance (20), comportant :
• un premier capteur de mesure (22) d'un signal électrique de référence représentatif des performances de la pile à combustible (1),
• au moins un connecteur (21), adapté à connecter la cellule de caractérisation (10) au circuit électrique de distribution (7) ou à un dispositif de caractérisation (30),
• une première unité de traitement (23), connectée au premier capteur de mesure (22) et au connecteur (21), adaptée à détecter une diminution des performances de la pile à combustible (1) à partir de la valeur mesurée du signal électrique de référence, et le cas échéant à commander la connexion de la cellule de caractérisation (10) au dispositif de caractérisation (30),
∘ un dispositif de caractérisation (30), comportant :
• une source électrique (31) d'un signal électrique d'excitation, connectée à la cellule de caractérisation (10),
• un deuxième capteur de mesure (32) d'un signal électrique de réponse, connecté à la cellule de caractérisation (10),
• une deuxième unité de traitement (33), connectée à la source électrique (31) et au deuxième capteur de mesure (32), et adaptée à caractériser un polluant présent dans au moins l'un des gaz réactifs à partir au moins du signal électrique de réponse mesuré.

2. Pile à combustible (1) selon la revendication 1, comportant plusieurs cellules électrochimiques (10) destinées à être des cellules de caractérisation, comportant des catalyseurs différents d'une cellule de caractérisation à l'autre.

3. Pile à combustible (1) selon la revendication 1 ou 2, adaptée à être alimentée en air provenant de l'environnement extérieur de la pile à combustible (1).

4. Pile à combustible (1) selon l'une quelconque des revendications 1 à 3, dans laquelle les canaux de distribution fluidique (42, 52) d'un même gaz réactif desdites cellules électrochimiques (10) sont reliés à un même collecteur d'entrée (2a, 2c) et à un même collecteur de sortie (3a, 3c).

5. Pile à combustible (1) selon l'une quelconque des revendications 1 à 4, dans laquelle chaque cellule électrochimique (10) est connectée à une puce de commande (6) assurant la connexion en série ou en parallèle de la cellule électrochimique (10) avec les autres cellules électrochimiques (10), et comportant chacune au moins le dispositif de caractérisation (30).

6. Pile à combustible (1) selon l'une quelconque des revendications 1 à 5, dans laquelle chaque cellule électrochimique (10) comporte un assemblage membrane électrodes, disposé entre deux plaques de maintien (40, 50), la membrane électrolytique (4) étant commune aux assemblages membrane électrodes, et les plaques de maintien (40, 50) étant formée chacune d'une plaque isolante (41, 51), réalisée en un matériau électriquement isolant, commune aux cellules électrochimiques (10).

7. Pile à combustible (1) selon la revendication 6, dans laquelle chaque plaque de maintien (40, 50) comporte :
∘ la plaque isolante (41, 51) présentant une face interne orientée vers la membrane électrolytique (4), et une face externe opposée, la face interne présentant des structurations formant des canaux de distribution fluidique (42, 52) séparés deux à deux par une paroi longitudinale (43, 53), les parois longitudinales (43, 53) présentant chacune une face d'extrémité orientée vers la membrane électrolytique (4) ;
∘ des portions conductrices de contact (44, 54), réalisées en un matériau électriquement conducteur, s'étendant sur la face d'extrémité des parois longitudinales (43, 53) au contact d'une électrode (11, 12) d'une cellule électrochimique (10) ;
∘ au moins une piste conductrice de polarisation (45, 55) de ladite cellule électrochimique (10), réalisée en un matériau électriquement conducteur, s'étendant sur la face externe de la plaque isolante (41, 51), et connecté audit circuit électrique de distribution (7) ; et
∘ des vias conducteurs (46, 56), s'étendant au travers des parois longitudinales (43, 53), et connectant les portions conductrices de contact (44, 54) avec les piste conductrice de polarisation (45, 55).

8. Procédé de fonctionnement d'une pile à combustible (1) selon l'une quelconque des revendications précédentes, la pile à combustible (1) étant connectée à une charge électrique (5), comportant les étapes suivantes :
∘ alimentation des cellules électrochimiques (10) en gaz réactifs, une cellule de caractérisation étant connectée au circuit électrique de distribution (7) ; et fourniture d'un courant électrique généré par les cellules électrochimiques (10) à la charge électrique (5) ;
∘ mesure du signal électrique de référence, et détection par le dispositif de surveillance (20), à partir de la valeur mesurée du signal électrique de référence, d'une diminution des performances de la pile à combustible (1) ;
∘ connexion de la cellule de caractérisation (10) au dispositif de caractérisation (30), et caractérisation d'un polluant présent dans au moins l'un des gaz réactifs par les sous-étapes suivantes :
• application d'un signal électrique d'excitation à la cellule de caractérisation (10) par la source électrique (31),
• mesure d'un signal électrique de réponse par le deuxième capteur de mesure (32),
• caractérisation du polluant par la deuxième unité de traitement (33) à partir d'au moins le signal électrique de réponse mesuré.

9. Procédé de fonctionnement selon la revendication 8, dans lequel la caractérisation du polluant est effectuée à partir d'une méthode électrochimique choisie parmi la courbe de polarisation, la spectroscopie d'impédance, l'échelon de courant, l'analyse harmonique, et la voltammétrie cyclique.

10. Procédé de fonctionnement selon la revendication 8 ou 9, la caractérisation du polluant étant obtenue par calcul d'au moins une valeur d'au moins un paramètre issu du signal électrique de réponse, le procédé comportant une étape d'identification du polluant **caractérisé par** comparaison de la valeur calculée à au moins une valeur prédéterminée.

## Patentansprüche

1. Brennstoffzelle (1), die dazu bestimmt ist, mit reaktiven Gasen versorgt zu werden, umfassend:
∘ mehrere elektrochemische Zellen (10), darunter mindestens eine sogenannte Charakterisierungszelle, die zueinander komplanar sind, umfassend:
• eine selbe elektrolytische Membran (4) und
• zwei selbe Halteplatten (40, 50), die beidseits der elektrolytischen Membran (4) angeordnet sind, umfassend jeweils eine isolierende Platte (41, 51), die aus elektrisch isolierendem Material ausgeführt ist, in der Fluidverteilungskanäle (42, 52) gebildet sind und durch die hindurch sich leitende Vias (46, 56) erstrecken;
∘ einen Verteilerstromkreis (7), der geeignet ist, einer elektrischen Last (5) einen von den elektrochemischen Zellen (10) erzeugten elektrischen Strom zuzuführen;
∘ eine Überwachungsvorrichtung (20), umfassend:
• einen ersten Messfühler (22) zum Messen eines elektrischen Referenzsignals, das für Leistungen der Brennstoffzelle (1) repräsentativ ist,
• mindestens einen Verbinder (21), der geeignet ist, die Charakterisierungszelle (10) mit dem Verteilerstromkreis (7) oder mit einer Charakterisierungsvorrichtung (30) zu verbinden,
• eine erste Verarbeitungseinheit (23), die mit dem ersten Messfühler (22) und mit dem Steckverbinder (21) verbunden ist und die geeignet ist, eine Verringerung der Leistungen der Brennstoffzelle (1) anhand des gemessenen Werts des elektrischen Referenzsignals zu detektieren und gegebenenfalls das Verbinden der Charakterisierungszelle (10) mit der Charakterisierungsvorrichtung (30) zu steuern,
∘ eine Charakterisierungsvorrichtung (30), umfassend:
• eine elektrische Quelle (31) eines elektrischen Anregungssignals, die mit der Charakterisierungszelle (10) verbunden ist,
• einen zweiten Messfühler (32) zum Messen eines elektrischen Antwortsignals, der mit der Charakterisierungszelle (10) verbunden ist,
• eine zweite Verarbeitungseinheit (33), die mit der elektrischen Quelle (31) und mit dem zweiten Messfühler (32) verbunden ist und die geeignet ist, eine Verunreinigung, die in mindestens einem der reaktiven Gase vorhanden ist, anhand mindestens des gemessenen elektrischen Antwortsignals zu charakterisieren.

2. Brennstoffzelle (1) nach Anspruch 1, umfassend mehrere elektrochemische Zellen (10), die dazu bestimmt sind, Charakterisierungszellen zu sein, umfassend Katalysatoren, die von einer Charakterisierungszelle zur anderen verschieden sind.

3. Brennstoffzelle (1) nach Anspruch 1 oder 2, die geeignet ist, mit Luft versorgt zu werden, die aus der Außenumgebung der Brennstoffzelle (1) stammt.

4. Brennstoffzelle (1) nach einem der Ansprüche 1 bis 3, bei der die Fluidverteilungskanäle (42, 52) eines selben reaktiven Gases der elektrochemischen Zellen (10) mit einem selben Eingangskollektor (2a, 2c) und mit einem selben Ausgangskollektor (3a, 3c) verbunden sind.

5. Brennstoffzelle (1) nach einem der Ansprüche 1 bis 4, bei der jede elektrochemische Zelle (10) mit einem Steuerchip (6) verbunden ist, der die serielle oder parallele Verbindung der elektrochemischen Zelle (10) mit den anderen elektrochemischen Zellen (10) gewährleistet, und jeweils mindestens die Charakterisierungsvorrichtung (30) umfasst.

6. Brennstoffzelle (1) nach einem der Ansprüche 1 bis 5, bei der jede elektrochemische Zelle (10) eine Membran-Elektroden-Anordnung umfasst, die zwischen zwei Halteplatten (40, 50) angeordnet ist, wobei die elektrolytische Membran (4) den Membran-Elektroden-Anordnungen gemeinsam ist und wobei die Halteplatten (40, 50) jeweils aus einer isolierenden Platte (41, 51) gebildet sind, die aus einem elektrisch isolierenden Material ausgeführt ist und die den elektrochemischen Zellen (10) gemeinsam ist.

7. Brennstoffzelle (1) nach Anspruch 6, bei der jede Halteplatte (40, 50) umfasst:
∘ die isolierende Platte (41, 51), die eine zur elektrolytischen Membran (4) hin ausgerichtete Innenfläche und eine entgegengesetzte Außenfläche aufweist, wobei die Innenfläche Strukturierungen aufweist, die Fluidverteilungskanäle (42, 52) bilden, die paarweise durch eine Längswand (43, 53) getrennt sind, wobei die Längswände (43, 53) jeweils eine zur elektrolytischen Membran (4) hin ausgerichtete Endfläche aufweisen;
∘ leitende Kontaktabschnitte (44, 54), die aus einem elektrisch leitenden Material ausgeführt sind und die sich über die Endfläche der Längswände (43, 53) in Kontakt mit einer Elektrode (11, 12) einer elektrochemischen Zelle (10) erstrecken;
∘ mindestens eine Polarisationsleiterbahn (45, 55) der elektrochemischen Zelle (10), die aus einem elektrisch leitenden Material ausgeführt ist, sich auf der Außenfläche der isolierenden Platte (41, 51) erstreckt und mit dem Verteilerstromkreis (7) verbunden ist; und
∘ leitende Vias (46, 56), die sich durch Längswände (43, 53) hindurch erstrecken und die leitenden Kontaktabschnitte (44, 54) mit den Polarisationsleiterbahnen (45, 55) verbinden.

8. Betriebsverfahren für eine Brennstoffzelle (1) nach einem der vorhergehenden Ansprüche, wobei die Brennstoffzelle (1) mit einer elektrischen Last (5) verbunden ist, umfassend die folgenden Schritte:
∘ Versorgen der elektrochemischen Zellen (10) mit reaktiven Gasen, wobei eine Charakterisierungszelle mit dem Verteilerstromkreis (7) verbunden ist; und Zuführen eines von den elektrochemischen Zellen (10) erzeugten Stroms zu der elektrischen Last (5);
∘ Messen des elektrischen Referenzsignals und Detektieren einer Verringerung der Leistungen der Brennstoffzelle (1) durch die Überwachungsvorrichtung (20) anhand des gemessenen Werts des elektrischen Referenzsignals;
∘ Verbinden der Charakterisierungszelle (10) mit der Charakterisierungsvorrichtung (30) und Charakterisieren einer Verunreinigung, die in mindestens einem der reaktiven Gase vorhanden ist, durch die folgenden Teilschritte:
• Anlegen eines elektrischen Anregungssignals an die Charakterisierungszelle (10) durch die elektrische Quelle (31),
• Messen eines elektrischen Antwortsignals durch den zweiten Messfühler (32),
• Charakterisieren der Verunreinigung durch die zweite Verarbeitungseinheit (33) anhand mindestens des gemessenen elektrischen Antwortsignals.

9. Betriebsverfahren nach Anspruch 8, bei dem die Charakterisierung der Verunreinigung anhand einer elektrochemischen Methode durchgeführt wird, die unter der Polarisationskurve, der Impedanzspektroskopie, dem Stromsprung, der Oberschwingungsanalyse und der zyklischen Voltammetrie gewählt ist.

10. Betriebsverfahren nach Anspruch 8 oder 9, wobei die Charakterisierung der Verunreinigung durch Berechnen mindestens eines Werts mindestens eines Parameters, der dem elektrischen Antwortsignal entnommen ist, erhalten wird, wobei das Verfahren einen Schritt des Identifizierens der charakterisierten Verunreinigung durch Vergleichen des berechneten Werts mit mindestens einem vorherbestimmten Wert umfasst.

## Claims

1. Fuel cell (1), intended to be supplied with reagent gases, comprising:
∘ several electrochemical cells (10), including at least one so-called characterization cell, coplanar to one another, comprising:
• a same electrolytic membrane (4) and
• two same holding plates (40, 50) disposed on either side of the electrolytic membrane (4), each comprising an insulating plate (41, 51), produced in an electrically insulating material, in which are formed fluidic distribution channels (42, 52), and through which extend conductive vias (46, 56);
∘ a distribution electrical circuit (7), suitable for supplying an electrical load (5) with an electrical current generated by the electrochemical cells (10);
∘ a monitoring device (20), comprising:
• a first sensor (22) for measuring a reference electrical signal representative of the performance levels of the fuel cell (1),
• at least one connector (21), suitable for connecting the characterization cell (10) to the distribution electrical circuit (7) or to a characterization device (30),
• a first processing unit (23), connected to the first measurement sensor (22) and to the connector (21), suitable for detecting a reduction of the performance levels of the fuel cell (1) from the measured value of the reference electrical signal, and, if necessary, commanding the connection of the characterization cell (10) to the characterization device (30),
∘ a characterization device (30), comprising:
• an electrical source (31) of an excitation electrical signal, connected to the characterization cell (10),
• a second sensor (32) for measuring a response electrical signal, connected to the characterization cell (10),
• a second processing unit (33), connected to the electrical source (31) and to the second measurement sensor (32), and suitable for characterizing a pollutant present in at least one of the reagent gases from at least the measured response electrical signal.

2. Fuel cell (1) according to Claim 1, comprising several electrochemical cells (10) intended to be characterization cells, comprising catalysts that differ from one characterization cell to another.

3. Fuel cell (1) according to Claim 1 or 2, suitable for being supplied with air from the environment outside of the fuel cell (1).

4. Fuel cell (1) according to any one of Claims 1 to 3, wherein the fluidic distribution channels (42, 52) for a same reagent gas of said electrochemical cells (10) are linked to a same input manifold (2a, 2c) and to a same output manifold (3a, 3c).

5. Fuel cell (1) according to any one of Claims 1 to 4, wherein each electrochemical cell (10) is connected to a control chip (6) ensuring the series or parallel connection of the electrochemical cell (10) with the other electrochemical cells (10), and each comprising at least the characterization device (30).

6. Fuel cell (1) according to any one of Claims 1 to 5, wherein each electrochemical cell (10) comprises an electrode membrane assembly, disposed between two holding plates (40, 50), the electrolytic membrane (4) being common to the electrode membrane assemblies, and the holding plates (40, 50) being each formed by an insulating plate (41, 51), produced in an electrically insulating material, common to the electrochemical cells (10).

7. Fuel cell (1) according to Claim 6, wherein each holding plate (40, 50) comprises:
∘ the insulating plate (41, 51) having an inner face oriented towards the electrolytic membrane (4), and an opposite outer face, the inner face having structurings forming fluidic distribution channels (42, 52) separated pairwise by a longitudinal wall (43, 53), the longitudinal walls (43, 53) each having an end face oriented towards the electrolytic membrane (4);
∘ conductive contact portions (44, 54), produced in an electrically conductive material, extending on the end face of the longitudinal walls (43, 53) in contact with an electrode (11, 12) of an electrochemical cell (10);
∘ at least one conductive polarization plate (45, 55) of said electrochemical cell (10), produced in an electrically conductive material, extending on the outer face of the insulating plate (41, 51), and connected to said distribution electrical circuit (7); and
∘ conductive vias (46, 56), extending through the longitudinal walls (43, 53), and connecting the conductive contact portions (44, 54) with the conductive polarization tracks (45, 55).

8. Method for operating a fuel cell (1) according to any one of the preceding claims, the fuel cell (1) being connected to an electrical load (5), comprising the following steps:
∘ supply of the electrochemical cells (10) with reagent gases, a characterization cell being connected to the distribution electrical circuit (7); and supplying of an electrical current generated by the electrochemical cells (10) to the electrical load (5);
∘ measuring the reference electrical signal, and detection, by the monitoring device (20), from the measured value of the reference electrical signal, of a reduction of the performance levels of the fuel cell (1);
∘ connection of the characterization cell (10) to the characterization device (30), and characterization of a pollutant present in at least one of the reagent gases by the following sub-steps:
• application of an excitation electrical signal to the characterization cell (10) by the electrical source (31),
• measurement of a response electrical signal by the second measurement sensor (32),
• characterization of the pollutant by the second processing unit (33) from at least the measured response electrical signal.

9. Operating method according to Claim 8, wherein the characterization of the pollutant is performed on the basis of an electrochemical method chosen from among polarization curve, impedance spectroscopy, current step, harmonic analysis and cyclic voltammetry.

10. Operating method according to Claim 8 or 9, the characterization of the pollutant being obtained by calculation of at least one value of at least one parameter derived from the response electrical signal, the method comprising a step of identification of the pollutant **characterized by** comparison of the calculated value to at least one predetermined value.
